# EUROPEAN PATENT SPECIFICATION

(11) **EP 0 273 742 B1**
(45) Date of publication and mention of the grant of the patent: **03.02.1993**
(21) Application number: 87311453.2
(22) Date of filing: 24.12.1987
(51) Int. Cl.: G06F 9/46

(54) **System and method of determining assignment between jobs and resources**
System und Verfahren für die Zuweisungsbestimmung zwischen Auftragen und Betriebsmittel
Système et méthode pour la détermination de l'affectation entre les travaux et les ressources

(30) Priority: 26.12.1986 JP 308603/86; 26.12.1986 JP 308639/86
(43) Date of publication of application: 06.07.1988
(73) Proprietor: KABUSHIKI KAISHA TOSHIBA, Kawasaki-shi, Kanagawa-ken 210 (JP)
(72) Inventor: Ishii, Satoru c/o Patent Division, Minato-ku Tokyo 105 (JP); Abe, Tetsuya c/o Patent Division, Minato-ku Tokyo 105 (JP); Onose, Etsuko c/o Patent Division, Minato-ku Tokyo 105 (JP)
(74) Representative: Freed, Arthur Woolf

(56) References cited:
- FR-A- 2 550 639
- ANGEWANDTE INFORMATIK APPLIED INFORMATICS, vol. 26, no. 9, September 1984, pages 379-388, Friedr. Vieweg & Sohn Verlagsgesellschaft mbH, Wiesbaden, DE; H. HEINRICH: "Ein heuristisches Lösungsverfahren zur Stundenplanung und Raumbelegung an Hochschulen"
- THE COMPUTER JOURNAL, vol. 4, April 1961-January 1962, pages 237-245; J.S. APPLEBY: "Techniques for producing school timetables on a computer and their application to other scheduling problems"

## Description

The present invention relates to an assignment determination system and method which can easily and effectively determine assignment combinations of a plurality of jobs and a plurality of resources.

Generally, in an expert system or a knowledge-based system, assignment combinations of a plurality of jobs and a plurality of resources are determined under a variety of restriction requirements. For example, assignment of workers (resources) with respect to a variety of duties (jobs) are determined in accordance with working conditions or working capacities (restriction requirements).

Conventionally, such assignment is manually determined. Therefore, if the numbers of jobs and resources are large, it is difficult to manually perform assignment determination. In addition, during assignment determination processing, a resource which can be assigned to a given job may already be assigned to another job. As a result, contradictions such that no resource can be assigned to the given job tend to occur, and assignment determination processing becomes impossible. In this case, the assignment determination processing must be repeated. For this reason, it takes a long period of time to determine assignment of jobs and resources.

In order to solve the above problem, such assignment determination is processed using a computer.

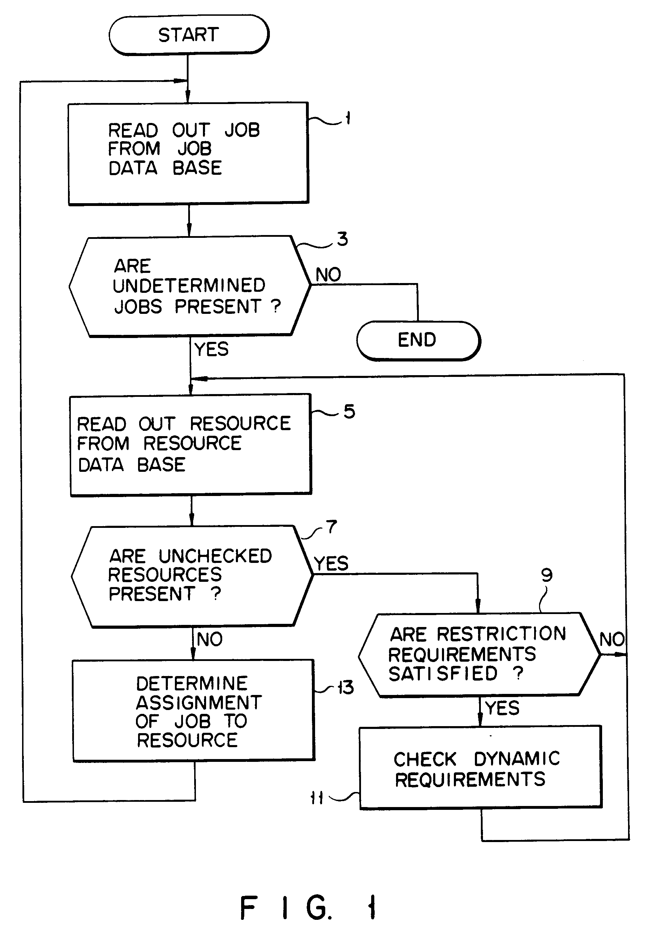

Fig. 1 is a flow chart of assignment determination processing using a computer according to a conventional technique.

In Fig. 1, in step 1, one job is read out from a plurality of jobs. Then, in step 3, the computer checks whether undetermined jobs are present. If an undetermined job is present in step 3, a resource is read out from a resource data base in step 5. If unchecked resources are present in step 7, the computer checks in step 9 whether restriction requirements are satisfied. If the restriction requirements are satisfied in step 9, dynamic requirements are checked in step 11. Then, the next resource is read out from the resource data base in step 5, and the restriction and dynamic requirements are similarly checked. If the computer determines in step 7 that no unchecked resources are present, a job is assigned to, for example, a resource which is found out first from resources satisfying the restriction and dynamic requirements. Note that if no resource which can be assigned to a job can be found, its assignment is changed as needed.

Such processing is repeatedly executed for all the jobs while removing determined jobs and resources.

An example of such assignment determination is "ISIS-a knowledge-based system for factory scheduling"; (Mark S. Fox and Stephen F. Smith; July, 1984) described in "The International Journal of Knowledge Engineering, Expert System, Vol. 1, July, 1984, PP. 25 - 49".

This article describes ISIS, a scheduling system including the order selection of jobs due to the time schedule, and including the resource scheduling. However, neither the decision order of resources is included, nor the number of alternatives is used.

Another example is "Nurse Duty Scheduling by Personal Computer" (Takashi SEKIGUCHI et al.) described in "The 3rd Knowledge Engineering Symposium, March, 1985, PP. 79 - 84". This article is a report of a system for forming a duty schedule of nurses using a personal computer and discloses a method of heuristical scheduling in accordance with several duty assignment rules. However, a determination order of resources is predetermined in accordance with a special evaluation function in this case. Jobs of a predetermined order are assigned to determined resources in accordance with this predetermined order.

"Basic Studies Relating to Scheduling Expert System" (Seimi KATOU) reported in "The 30th National Convention of Information Processing Society 7L-5, March, 1985" is a report of studies of restriction requirements in scheduling and a scheduling system described in the Prolog. This article describes a method of searching a solution which satisfies requirements by automatic back-tracking. The author pointed out that a drawback of this method is that the method requires a long period of time.

In the conventional processing methods described above, a propriety of assignment must be checked in accordance with assignment restriction requirements and the like even for jobs and resources which cannot be combined for assignment. Especially when assignment requirements are complex and hence assignment often changes, combinations of such jobs and resources must be frequently checked. For this reason, a load on a computer is large, and a processing time is increased.

Even when there is a combination of a job and a resource which can be uniquely determined in accordance with restriction requirements and the like, they cannot be detected beforehand in the above conventional processing methods. For this reason, every time the assignment procedure becomes impossible, the above processing must be repeatedly executed while changing assignment.

It is an object of the present invention to provide a method of determining assignment between jobs and resources, which can reduce a processing load with respect to assignment determination between a plurality of jobs and a plurality of resources, thereby reducing a processing time.

In order to achieve the above object, according to the present invention, there is provided an assignment determination support system for determining assignment between resources and jobs in accordance with assignment restriction requirements, wherein a first data element represents a resource and a second data element represents a job or, alternatively, the first data element represents a job and the second data element represents a resource, characterized by: a first data base for storing the first data element group; first read out means for reading out the first data elements from the first data base; a second data base for storing the second data element group; second read out means for reading out the second elements from said second data base; restriction requirements checking means for checking whether an assignment between each first data element read out from said first data base by said first read out means and each second element read out from said second data base by said second read out means can be made in accordance with predetermined restriction requirements governing combinations of the first and second data elements; assignable element storage means for storing a combination of the first and second data elements, which is determined as satisfying the restriction requirements by said restriction requirements checking means; and assignment-determining means for referring to said assignable data element storage means and, for each of the first data elements taken sequentially in order of their increasing assignability under the restriction requirements, determining an assignment of a second data element to the first elements.

Furthermore, there is provided an assignment determination method for determining assignment between resources and jobs in accordance with assignment restriction requirements, wherein a first data element represents a resource and a second data element represents a job or, alternatively, the first data element represents a job and the second data element represents a resource, characterized by the steps of:
a) reading out a given first data element from a group of the first data elements;
b) reading out a plurality of the second data elements with respect to the said first data element which has been read out;
c) checking whether a combination of the said first data element and each of the second data elements satisfies the restriction requirements;
d) storing the combination of the first data element and each of the second data elements for which the checking result is indicative that the combination satisfies the restriction requirements;
e) performing steps a) to d) above with respect to all the first data elements;
f) selecting a combination of second data elements and the first data element having the fewest assignable second data elements, from the combinations of first data elements and second data elements which have been stored in step d); and
g) assigning one of the second data elements which are selected in step f).

According to the present invention, assignable candidates between a plurality of jobs and a plurality of resources are selected beforehand in accordance with specific restriction requirements. Therefore, unlike in a conventional system, restriction requirements need not be checked for jobs and resources which cannot be combined for assignment. In addition, since assignment is determined from resources having fewer jobs to which they can be assigned, assignment contradiction occurs rarely. Even if a processing contradiction occurs for a given resource, assignment change processing can easily be performed because jobs which can be assigned to the resource are predetermined, thereby efficiently executing the assignment determination processing. Therefore, according to the method of the present invention, the processing load for assignment determination of a large number of jobs and resources can be greatly reduced, and the processing can be performed efficiently.

This invention can be more fully understood from the following detailed description of preferred embodiments, by way of example only, when taken in conjunction with the accompanying drawings, in which:
Fig. 1 is a flow chart for explaining conventional assignment determination processing;
Fig. 2 is a block diagram of an embodiment of an assignment determination system for determining assignment between jobs and resources according to the present invention;
Figs. 3A and 3B are flow charts for explaining operations of the embodiment shown in Fig. 2;
Fig. 4 is a flow chart for explaining a detailed operation of an assignment determination section shown in Fig. 2;
Fig. 5 is a block diagram of another embodiment of the present invention; and
Figs. 6A and 6B are flow charts for explaining operations of the embodiment shown in Figs. 6A and 6B.

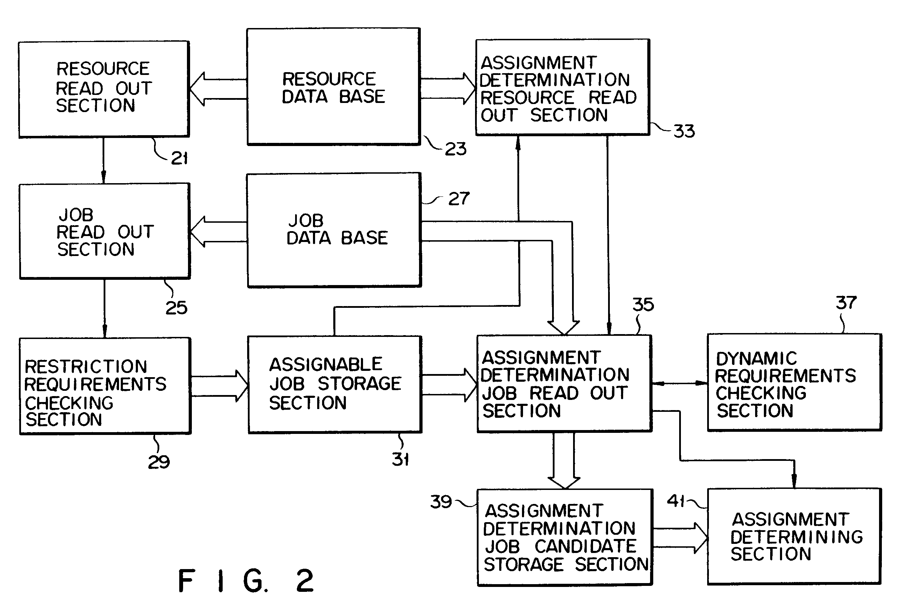

Fig. 2 is a schematic view of a method for determining assignment between jobs and resources according to the present invention. In Fig. 2, data of a plurality of jobs are stored in job data base 27, data of a plurality of resources are stored in resource data base 23, both of which are subjected to assignment processing.

In this case, a plurality of jobs stored in data base 27 are given as: j1...a duty in which a worker must operate a motorcycle of 50 cc;
j2...a duty in which a worker must operate a car;
j3...a duty in which a worker need not operate any of a motorcycle of 50 cc, a car, or a motorcycle of more than 50 cc;
j4...a duty in which a worker must operate a motorcycle of 50 cc;
j5...a duty in which a worker must operate a motorcycle of more than 50 cc; and
j6...a duty in which a worker need not operate any of a motorcycle of 50 cc, a car, or a motorcycle of more than 50 cc.

Data of a plurality of resources stored in data base 23 are given as:
a...a person having a driver's license;
b...a person having a license to operate a motorcycle of 50 cc;
c...a person not having any license;
d...a person having a license to operate a motorcycle of more than 50 cc;
e...a person not having any license; and
f...a person not having any license.

Resource read out section 21 mechanically reads out a resource from data base 23. Job read out section 25 selectively reads out a job from data base 27. Restriction requirements checking section 29 checks whether a combination of the job read out from section 25 and the resource read out from section 21 is possible in accordance with specific restriction requirements with respect to the job and resource combination.

When the jobs and resources are given as described above, the restriction requirements used in section 29 are given as follows:
i) a person to be assigned to jobs j1 and j4 must have a license to operate a car, a motorcycle of 50 cc, or a motor cycle of more than 50 cc;
ii) a person to be assigned to job j2 must have a driver's license;
iii) a person to be assigned to job j5 must have a license to operate a motorcycle of more than 50 cc; and the like.

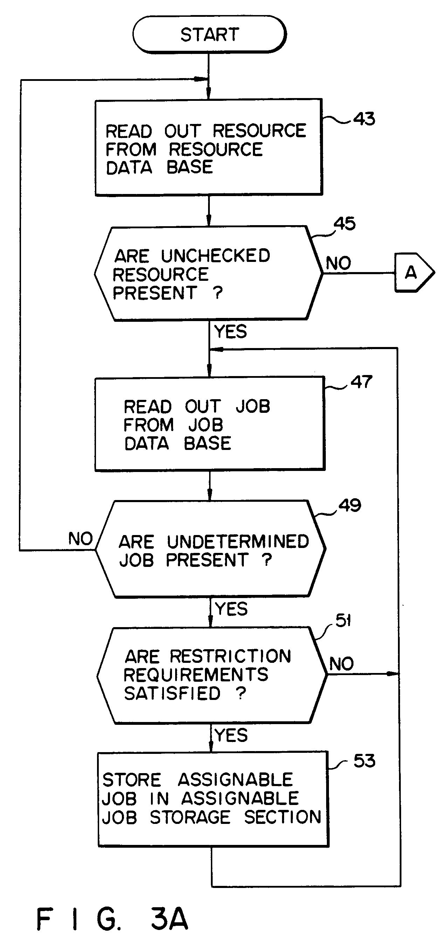

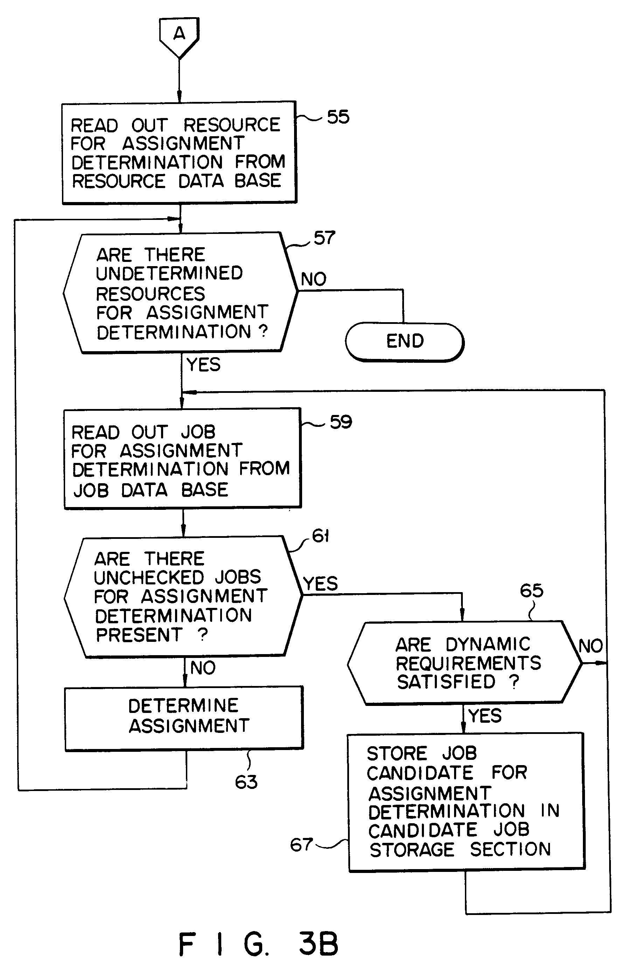

Operations for checking combinations of the jobs and resources of resource read out, job read out, and restriction requirements checking sections 21, 25, and 29 are performed as shown in Figs. 3A and 3B.

That is, in step 43, a resource is read out from resource data base 23. In this case, the resources are sequentially read out in the order they were stored. Then, in step 45, it checks as to whether unchecked resources are present. If Y (YES) in step 45, job read out section 25 reads out jobs from job data base 27 in step 47. Each time a resource is given, a plurality of jobs stored in data base 27 are sequentially read out in the order they were stored. Then, in step 49, it is checked whether undetermined jobs are present. If N (NO) in step 49, the flow returns to step 43, and another resource is read out from data base 23. If Y in step 49, the flow advances to step 51. In step 51, restriction requirements checking section 29 checks restriction requirements of combinations of the jobs and resources read out from data bases 23 and 27, respectively. If the restriction requirements are not satisfied in step 51, the flow returns to step 47, and other jobs are read out from data base 27.

If the restriction requirements are satisfied in step 51, the flow advances to step 53, and this information is stored in assignable job storage section 31 as a candidate for an assignable job with respect to the resource. In a processing sequence from steps 43 through 53, assignable job candidates are checked with respect to all the resources, and job candidates for each resource are stored in section 31.

If N in step 45, the flow advances to step 55. In step 55, assignment determination resource, read out of section 33, refers to section 31 and sequentially reads out the resources, to which assignable jobs have respectively been obtained, from the one having the fewest assignable jobs. Section 33 also reads out detailed information about the resource and supplies it to assignment determination job read out section 35. In step 57, it is checked whether undetermined resources for assignment determination are present. If N in step 57, this processing is ended. Otherwise, the flow advances to step 59. In step 59, section 35 reads out detailed information of a job corresponding to the resource read out from section 31 of data base 27.

Then, in step 61, it is checked as to whether unchecked jobs for assignment determination are present. If Y in step 61, the flow advances to step 65. In step 65, dynamic requirements checking section 37 checks dynamic requirements such as limitations as to days and hours of the jobs and resources read out as described above.

Job candidates assignable to the resource are selected in accordance with the dynamic requirements checking result and stored in assignment determination job candidate storage section 39 (step 67). Then, the flow returns to step 59, and the same processing is repeated until unchecked jobs for assignment determination are no longer present. That is, the dynamic requirements checking processing and the processing for storing the job candidates, which satisfied the requirements in section 39, are repeatedly executed for all the job candidates with respect to the resource obtained in section 31. As a result, only the jobs assignable to the resource are obtained in section 39. That is, only the assignable jobs as opposed to the already assigned jobs are obtained.

If N in step 61, the flow advances to step 63. In step 63, assignment determining section 41 selects one of the job candidates stored in section 39 and determines whether it is a job to which the above resource is assigned. If a plurality of jobs which can be assigned to the resource are present, the one with the severest restriction requirements is selected, and the resource is assigned to the chosen one.

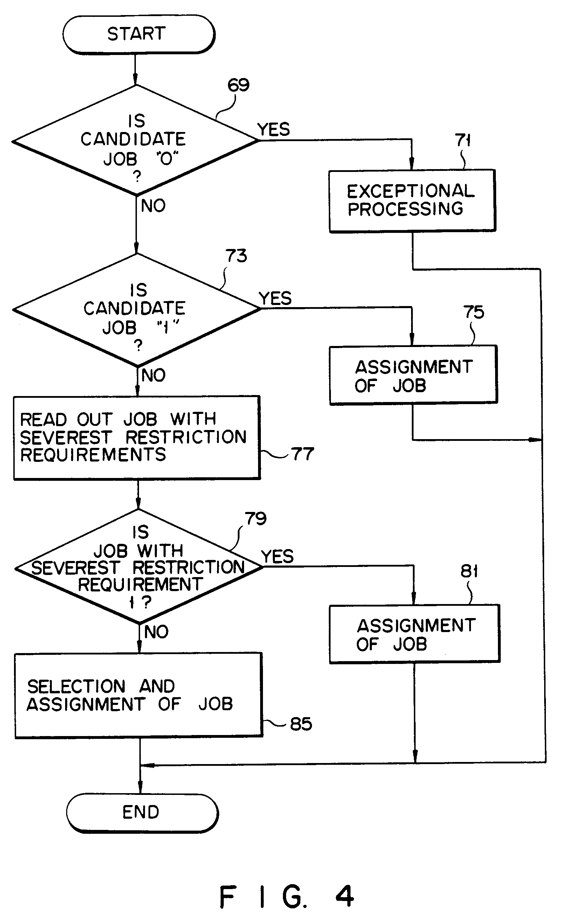

This assignment determination processing is performed as is shown in Fig. 4.

First, if a candidate job flag is "0", it is checked whether a job to be assigned to the resource is obtained (step 69).

If N in step 69, assignment determination cannot be performed. Therefore, exceptional processing is executed such that assignment determination processing is executed again from the beginning, or the resource is neglected (step 71). That is, when all the job candidates are rejected by the dynamic requirements checking processing and no job candidate is obtained in section 39, then exceptional processing is executed. Examples of the exceptional processing are:
i) assignment processing of the next resource without assigning the current resource to a job;
ii) informing an operator of this fact and waiting for an instruction from the operator as needed;
iii) changing assignment combinations which are already determined and performing the assignment processing again;
iv) tracing back assignment determinations to a proper time, canceling the assignment determinations from the time, and then performing the assignment processing again;
v) correcting the contents of the job and processing the job again; and
vi) correcting contents of the resource and processing the resource again.

More specifically, assignment change is requested from section 41, and the resources already assigned to jobs are processed again. In this case, a job other than that already assigned to each resource is selected from the job candidates and subjected again to the assignment determination processing.

However, since the resources are sequentially processed from the one having fewest assignable jobs as described above, the number of jobs assignable to a resource which is processed later is larger than that of jobs assignable to a resource which is processed earlier. That is, resources having high flexibility with respect to assignment remain unassigned to a later stage in assignment determination. As a result, even if some of the jobs assignable to a given resource are already assigned to other resources, a job to be assigned to the given resource can be easily found from the remaining jobs. Therefore, an assignment contradiction rarely occurs, thereby improving processing efficiency.

When a job candidate is obtained, it is checked in step 73 whether the number of job candidates is one. If Y in step 73, the resource can be assigned to only this job, so that assignment of the resource to the job is determined (step 75).

If a plurality of assignable jobs are obtained, restriction requirements with respect to the jobs are checked, and one with severest restriction requirements is selected (step 77). At this time, the restriction requirements are given as the presence/absence of a driver's license, working hours, and the like. In step 71, it is checked whether the number of jobs with the severest restriction requirements is one. If Y in step 71, the resource is assigned to the job with the severest restriction requirements (step 81).

Note that when a plurality of jobs with severest restriction requirements are present, one is selected from these jobs, and the resource is assigned to this selected job (step 85). The following methods are adopted as needed to determine the job in this case. That is, this job selection determination is performed by:
i) determining a job in accordance with contingency such as an alphabetical order of names;
ii) selecting a job at random in accordance with random numbers;
iii) informing an operator of this fact and waiting for an instruction therefrom; and
iv) determining a job in accordance with contents of other jobs to which the resource can be assigned and with a relationship between a plurality of jobs (e.g., a time intervals between the jobs and duration of each job).

In this manner, a job to which the resource read out from data base 23 is assigned is determined.

After assignment of the resource with respect to the job is determined, assignment determination resource read out section 33 is informed of this and is caused to start processing with respect to the next resource. In this case, it is a matter of course that the processing is executed while removing jobs to which resources are already assigned from job candidates obtained with respect to the next resource.

The above processing is repeatedly executed until resources are assigned to all the jobs.

As described above, according to the method of the present invention, jobs assignable to each resource under specific restriction requirements are obtained as assignment candidates. Therefore, in an actual assigning operation, restriction requirements need not be checked for jobs and resources which cannot be combined for assignment under the restriction requirements. In addition, by determining job candidates, jobs to which the resource cannot be assigned can be effectively removed, thereby reducing the number of combinations of jobs and the resource to be checked. As a result, wasteful processing can be eliminated and the assignment determination processing can be efficiently performed in a short period of time.

In addition, since resources are sequentially assigned from the one having fewest assignable jobs, a lager number of assignable jobs can be obtained for the remaining resources. That is, the resources are assigned to jobs from the one having lower flexibility with respect to assignment. Therefore, if assignable jobs are already determined, the resource can be relatively easily assigned to one of the remaining jobs. As a result, an assignment contradiction rarely occurs and hence a need for re-assignment is reduced, thereby efficiently performing the assignment determination processing.

Even if an assignment contradiction occurs and a predetermined assignment determination must be changed or planned to be changed later, this processing can be easily performed because job candidates with respect to the resource are obtained in advance.

Therefore, when a large number of jobs and resources are to be assigned with each other, assignment determination can be efficiently and effectively performed because assignment candidates can be selected in advance in accordance with specific restriction requirements.

Note that the present invention is not limited to the above embodiment. For example, the restriction requirements may be determined in accordance with an assignment policy. It is a matter of course that a plurality of resources can be assigned to a single job. Moreover, the present invention can be applied to not only assignment of persons but also to an operation schedule of machines or vehicles. In the above embodiment, an assignment order of resources is predetermined, and assignment processing is executed in accordance with the order. However, during the processing, the assignment order may be corrected in accordance with an assignment situation. In this case, the assignment order may be changed at a timing assignment of each of a predetermined number of resources is determined, at a timing at which characteristics of a resource for assignment are changed, or at a timing designated beforehand by an operator.

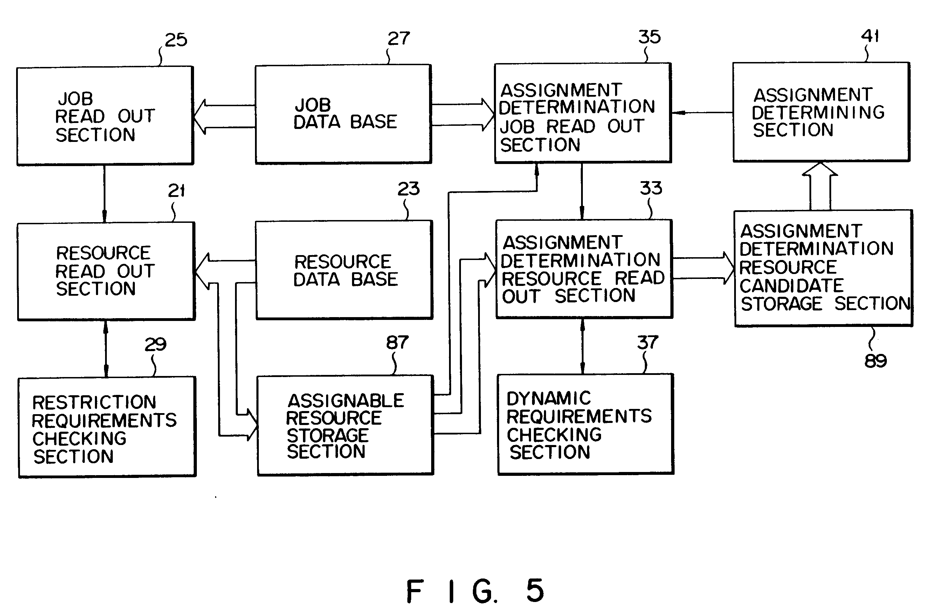

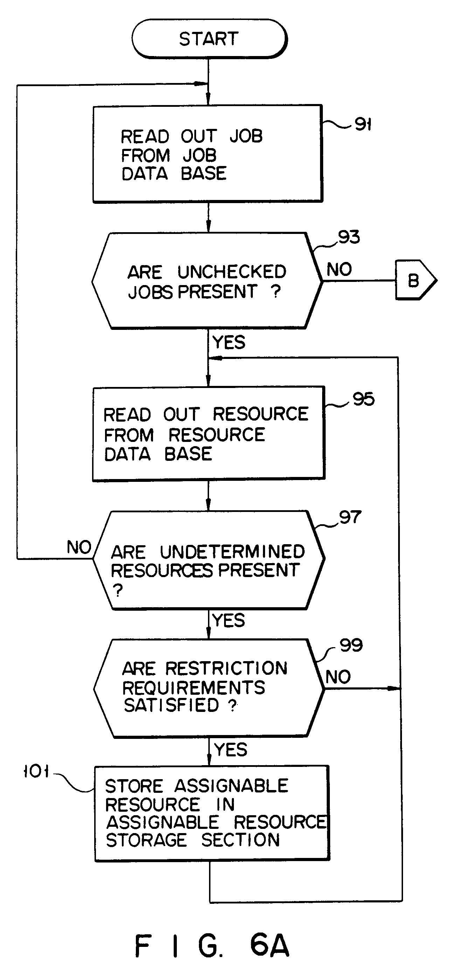

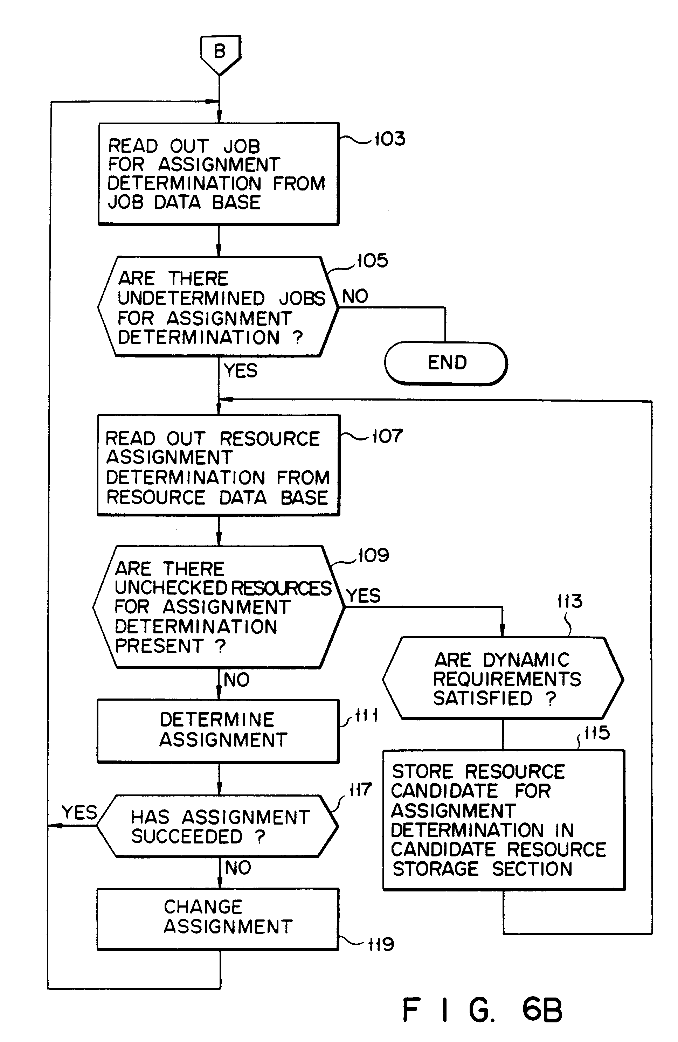

Figs. 5 and 6A and 6B show another embodiment of the present invention.

In the embodiment shown in Figs. 2 through 4, each time a resource is given, a plurality of jobs stored in job data base 27 are sequentially read out and assigned to the given resource in the order they were stored.

In the embodiment shown in Figs. 5 and 6A and 6B, each time a job is given, a plurality of resources stored in resource data base 23 are sequentially read out and assigned to the given job in the order they were stored.

This embodiment will be described below. Note that the same parts as in the first embodiment are denoted by the same reference numerals, and a detailed description thereof will be omitted.

In step 91 of flow charts shown in Figs. 6A and 6B, a job is read out from job data base 27. In this case, the jobs are read out, e.g., in the order they were stored. Then, in step 93, it is checked whether unchecked jobs are present. If Y (YES) in step 93, resource read out section 21 reads out resources from resource data base 23 in step 95. Each time a job is given, a plurality of resources stored in data base 23 are sequentially read out in the order they were stored. Then, in step 97, it is checked whether undetermined resources are present. If N in step 97, the flow returns to step 91, and another job is read out from data base 27. If Y in step 97, the flow advances to step 99. In step 99, restriction requirements checking section 97 checks restriction requirements of combinations of the jobs and resources read out from data bases 27 and 23, respectively. If the restriction requirements are not satisfied in step 99, the flow returns to step 95, and other resources are read out from data base 23.

If the restriction requirements are satisfied in step 99, the flow advances to step 101. In step 101, this information is stored in assignable resource storage section 87 as a candidate of a resource assignable to the job. Assignable resource candidates are checked with respect to all the jobs in a processing sequence from steps 91 to 101, and the resource candidates for the respective jobs are stored in section 87.

If N in step 93, the flow advances to step 103. In step 103, assignment determination job read out section 35 refers to section 87 and sequentially reads out jobs to which assignable resources are obtained from the one having fewest assignable resources. Section 35 also reads out detailed information about the jobs from data base 27 and supplies the information to assignment determination resource read out section 33. Then, in step 105, it is checked whether undetermined jobs for assignment determination are present. If N in step 105, the processing is ended. If Y in step 105, the flow advances to step 107. In step 107, section 33 reads out detailed data about the resources corresponding to the jobs read out from section 87 from data base 23. Then, in step 109, it is checked whether unchecked resources for assignment determination are present. If Y in step 109, the flow advances to step 113. In step 113, dynamic requirements checking section 37 checks dynamic requirements such as limitations of the date and hours between the job and resources read out as described above.

Resource candidates assignable to the job are selected in accordance with a checking result of the dynamic requirements, and only the selected resource candidates are stored in assignment determination candidate resource storage section 89 (step 115). Then, the flow returns to step 107, and the same processing is repeated until no unchecked resource for assignment determination is present. That is, the dynamic requirements checking processing and processing for storing the resource candidates which satisfied the requirements in section 89 are repeatedly executed for all the resource candidates with respect to the job obtained in section 87. As a result, only the resources assignable to the job are obtained in section 89. That is, only the resources other than those already assigned to other jobs are obtained.

If N in step 109, the flow advances to step 111. In step 111, assignment determination section 41 selects one of the resource candidates stored in section 89 and determines it as a resource to be assigned to the job. If a plurality of resources assignable to the job are present, the one with severest restriction requirements is selected, and the job is assigned to this selected resource. In step 117, it is checked whether assignment has succeeded. If Y in step 117, the flow returns to step 103, and a job for assignment determination is read out. If N in step 117, section 41 requests change of the determined assignment to the respective sections. Therefore, jobs to which resources are already assigned are processed again. In this case, the processing is repeatedly performed by selecting resources other than those already assigned to jobs from the resource candidates.

Note that a method of the assignment determination is the same as that described in the first embodiment with reference to the flow chart in Fig. 4, and a detailed description thereof will be omitted.

The above processing is repeatedly executed until the resources are assigned to all the jobs.

Note that when job candidates assignable to resources are obtained in advance, jobs may be assigned to sequentially readout resources. When both the jobs and resources are obtained, it is convenient to switch processing as needed in accordance with an assignment policy from processing in which a resource is assigned to a job to processing in which a job is assigned to a resource and vice versa.

## Claims

1. An assignment determination support system for determining assignment between resources and jobs in accordance with assignment restriction requirements, wherein a first data element represents a resource and a second data element represents a job or, alternatively, the first data element represents a job and the second data element represents a resource, characterized by:
a first data base (23) for storing the first data element group;
first read out means (21, 33) for reading out the first data elements from the first data base;
a second data base (27) for storing the second data element group;
second read out means (25, 35) for reading out the second elements from said second data base;
restriction requirements checking means (29) for checking whether an assignment between each first data element read out from said first data base by said first read out means and each second element read out from said second data base by said second read out means can be made in accordance with predetermined restriction requirements governing combinations of the first and second data elements;
assignable element storage means (31) for storing a combination of the first and second data elements, which is determined as satisfying the restriction requirements by said restriction requirements checking means; and
assignment-determining means (35, 39, 41) for referring to said assignable data element storage means and, for each of the first data elements taken sequentially in order of their increasing assignability under the restriction requirements, determining an assignment of a second data element to the first elements.

2. A system according to claim 1, characterized in that said second read out means reads out a plurality of second data elements each time one first data element is read out.

3. A system according to claim 1, characterized in that said assignment-determining means comprises:
assignment-determining first element read out means (33) for reading out information relating to the first data elements stored in said assignable element storage means from said first data base;
assignment-determining second element read out means (35) for reading out information relating to the second data elements stored in said assignable element storage means from said second data base;
a dynamic requirements checking section (37) for checking dynamic requirements between the first and second data elements read out by said assignment-determining first data element read out means and said assignment-determining second data element read out means, respectively;
an assignment-determining second data element candidate storage section (39) for storing each second data element which is determined as satisfying the dynamic requirements by said dynamic requirements checking section (37) as an assignment-determining second data element candidate;
executing means for repeatedly executing a checking operation performed by said dynamic requirements checking section and a storage operation of said assignment-determining second data element candidate storage section with respect to all the second data elements stored in said assignable second data element storage section; and
assignment-determining means (41) for selecting one of the second data elements stored in said assignment-determining second data element candidate storage section and assigning the selected second data element to the first data element.

4. A system according to any preceding claim, characterized in that each first data element represents a resource, and each second data element a job.

5. A system according to any preceding claim, characterized in that each first data element represents a job, and each second data element a resource.

6. A system according to claim 3, characterized in that said assignment-determining first data element read out means refers to said assignable second data element storage means to sequentially read out the first data elements in order of assignability from the one with the fewest assignable second data elements, and refers to said first data base to read out information about the first element which has been read out.

7. A system according to claim 3, characterized in that said assignment-determining means refers to said assignment-determining second data element candidate storage section, selects the second data element with the severest restriction requirements when a plurality of the second data elements assignable to the first data element are present, and assigns the first data element to the selected second data element.

8. A system according to claim 3, 6 or 7, characterized in that said assignment-determining means refers to said assignment-determining second data element candidate storage section and performs exceptional processing when no second data element candidate is present.

9. An assignment determination method for determining assignment between resources and jobs in accordance with assignment restriction requirements, wherein a first data element represents a resource and a second data element represents a job or, alternatively, the first data element represents a job and the second data element represents a resource, characterized by the steps of:
a) reading out a given first data element from a group of the first data elements;
b) reading out a plurality of the second data elements with respect to the said first data element which has been read out;
c) checking (29) whether a combination of the said first data element and each of the second data elements satisfies the restriction requirements;
d) storing (31) the combination of the first data element and each of the second data elements for which the checking result is indicative that the combination satisfies the restriction requirements;
e) performing steps a) to d) above with respect to all the first data elements;
f) selecting (35) a combination of second data elements and the first data element having the fewest assignable second data elements, from the combinations of first data elements and second data elements which have been stored in step d); and
g) assigning (37, 39, 41) one of the second data elements which are selected in step f).

10. A method according to claim 9, characterized in that steps f) and g) comprise the steps of:
h) reading out information relating to the first data element stored in step d) from the first data element group;
i) reading out information relating to the second data elements stored in step d) from the second data element group;
j) checking (37) dynamic requirements of the information relating to the first and second data elements read out in steps h) and i);
k) storing (39) the second data elements which are determined as satisfying the dynamic requirements as a result of the checking in step j) as assignment-determining second data element candidates;
l) repeatedly performing steps j) and k) with respect to all the second data elements stored in step d); and
m) selecting one of the assignment-determining second data element candidates stored in step k) and determining the selected second data element as a second data element to be assigned to the first data element.

11. A method according to claim 10, characterized in that the first data element represents a resource, and the second data element a job.

12. A method according to claim 10, characterized in that the first data element represents a job, and the second data element a resource.

13. A method according to claim 10, 11 or 12, characterized in that, when a plurality of second data elements, assignable to the first data element, are present upon selection of the second data element in the step g), the second data element is selected with the severest restriction requirements.

## Patentansprüche

1. Zuweisungsbestimmungs-Unterstützungssystem für die Zuweisungsbestimmung zwischen Betriebsmitteln und Aufträgen in Übereinstimmung mit zuweisungseinschränkenden Bedingungen, bei dem ein erstes Datenelement ein Betriebsmittel und ein zweites Datenelement einen Auftrag repräsentiert, oder umgekehrt, bei dem das erste Datenelement einen Auftrag und das zweite Datenelement ein Betriebsmittel repräsentiert, gekennzeichnet durch:
eine erste Datenbasis (23) zur Speicherung der ersten Datenelementgruppe;
eine erste Ausleseeinrichtung (21, 33) zum Auslesen der ersten Datenelemente aus der ersten Datenbasis;
eine zweite Datenbasis (27) zur Speicherung der zweiten Datenelementgruppe;
eine zweite Ausleseeinrichtung (25, 35) zum Auslesen der zweiten Elemente aus der zweiten Datenbasis;
eine Kontrolleinrichtung für die einschränkenden Bedingungen (29) zur Prüfung, ob eine Zuweisung zwischen jedem ersten mittels der ersten Ausleseeinrichtung aus der ersten Datenbasis ausgelesenen Datenelement und jedem zweiten mittels der zweiten Ausleseeinrichtung aus der zweiten Datenbasis ausgelesenen Element in Übereinstimmung mit vorgegebenen einschränkenden Bedingungen, die die Kombinationen der ersten und zweiten Datenelemente bestimmen, möglich ist;
eine Speichereinrichtung (31) für zuweisbare Elemente zur Abspeicherung einer Kombination der ersten und zweiten Datenelemente, von der seitens der Kontrolleinrichtung für die einschränkenden Bedingungen festgestellt wurde, daß sie die einschränkenden Bedingungen erfüllt; und
eine Zuweisungsbestimmungseinrichtung (35, 39, 41) für den Zugriff auf die Speichereinrichtung für zuweisbare Datenelemente und für jedes der ersten Datenelemente in der Reihenfolge ihrer ansteigenden Zuweisbarkeit unter den einschränkenden Bedingungen zur Bestimmung einer Zuweisung zwischen einem zweiten Datenelement zu einem ersten Datenelement.

2. System gemäß Anspruch 1, dadurch gekennzeichnet, daß die zweite Ausleseeinrichtung eine Vielzahl zweiter Datenelemente jedesmal ausliest, wenn eine erstes Datenelement ausgelesen wird.

3. System gemäß Anspruch 1, dadurch gekennzeichnet, daß die Zuweisungsbestimmungseinrichtung folgendes umfaßt:
eine Ausleseeinrichtung für die Zuweisungsbestimmung der ersten Elemente (33) zum Auslesen von Informationen bezüglich der ersten Datenelemente aus der ersten Datenbasis, die in der Speichereinrichtung für zuweisbare Elemente abgelegt sind;
eine Ausleseeinrichtung für die Zuweisungsbestimmung der zweiten Elemente (35) zum Auslesen von Informationen bezüglich der zweiten Datenelemente aus der zweiten Datenbasis, die in der Speichereinrichtung für zuweisbare Elemente abgelegt sind;
einen Kontrollabschnitt für die dynamischen Bedingungen (37) zur Prüfung der dynamischen Bedingungen zwischen den ersten und zweiten Datenelementen, die von der Ausleseeinrichtung für die Zuweisungsbestimmung der ersten Datenelemente bzw. von der Ausleseeinrichtung für die Zuweisungsbestimmung der zweiten Datenelemente ausgelesen werden;
einen Speicherabschnitt (39) zur Abspeicherung der zweiten Datenelementanwärter für die Zuweisungsbestimmung, die der Kontrollabschnitt (37) für die dynamischen Bedingungen als die dynamischen Bedingungen erfüllende Datenelemente ermittelt hat, als einen zweiten Datenelementanwärter für die Zuweisungsbestimmung;
eine Abwicklungseinrichtung zur wiederholten Abwicklung einer vom Kontrollabschnitt für die dynamischen Bedingungen durchgeführten Prüfoperation sowie einer Speicherungsoperation durch den Speicherabschnitt zur Abspeicherung der zweiten Datenelementanwärter für die Zuweisungsbestimmung hinsichtlich aller zweiten Datenelemente, die im Speicherabschnitt für zuweisbare zweite Datenelement abgelegt sind; und
eine Zuweisungsbestimmungseinrichtung (41) zur Auswahl eines der zweiten im Speicherabschnitt zur Abspeicherung der zweiten Datenelementanwärter für die Zuweisungsbestimmung abgelegten Datenelement und der Zuweisung des ausgewählten zweiten Datenelements zum ersten Datenelement.

4. System gemäß einem der vorangegangen Ansprüche, dadurch gekennzeichnet, daß jedes der ersten Datenelemente eine Betriebsmittel und jedes der zweiten Datenelemente einen Auftrag repräsentiert.

5. System gemäß einem der vorangegangen Ansprüche, dadurch gekennzeichnet, daß jedes der ersten Datenelemente einen Auftrag und jedes der zweiten Datenelemente ein Betriebsmittel repräsentiert.

6. System gemäß Anspruch 3, dadurch gekennzeichnet, daß die erste Ausleseeinrichtung für die Zuweisungsbestimmung der ersten Datenelemente auf die Speichereinrichtung für die zuweisbaren zweiten Datenelement zugreift, um die ersten Datenelemente in der Reihenfolge ihrer Zuweisbarkeit beginnend mit demjenigen mit den wenigsten zuweisbaren zweiten Datenelementen auszulesen und das auf die erste Datenbasis zugreift, um Informationen bezüglich des ersten ausgelesenen Elements auszulesen.

7. System gemäß Anspruch 3, dadurch gekennzeichnet, daß die Zuweisungsbestimmungseinrichtung auf den Speicherabschnitt zur Zuweisungsbestimmung der zweiten Datenelementanwärter zugreift, dasjenige zweite Datenelement mit den strengsten einschränkenden Bedingungen auswählt, wenn eine Vielzahl zweiter dem ersten Datenelement zuweisbarer Datenelemente vorhanden sind, und das erste Datenelement dem zweiten Datenelement zuweist.

8. System gemäß einem der Ansprüche 3, 6 oder 7, dadurch gekennzeichnet, daß die Zuweisungsbestimmungseinrichtung auf den Speicherabschnitt für die zweiten Datenelementanwärter zur Zuweisungsbestimmung zugreift und eine Ausschlußverarbeitung durchführt, wenn kein zweiter Datenelementanwärter vorhanden ist.

9. Verfahren zur Zuweisungsbestimmung zwischen Ressourcen bzw. Betriebsmitteln und Aufträgen gemäß den zuweisungseinschränkenden Bedingungen, bei dem ein erstes Datenelement ein Betriebsmittel und ein zweites Datenelement einen Auftrag repräsentiert, oder umgekehrt, bei dem das erste Datenelement einen Auftrag und das zweite Datenelement ein Betriebsmittel repräsentiert, gekennzeichnet durch folgende Schritte:
a) Auslesen eines bestimmten ersten Datenelements aus einer Gruppe erster Datenelemente;
b) Auslesen einer Vielzahl der zweiten Datenelemente mit Bezug auf das erste ausgelesene Datenelement;
c) Kontrolle (29), ob eine Kombination zwischen dem ersten Datenelement und jedem der zweiten Datenelemente die einschränkenden Bedingungen erfüllt;
d) Abspeichern (31) der Kombination aus dem ersten Datenelement und jedem der zweiten Datenelemente, bei dem das Kontrollergebnis darauf hindeutet, daß die Kombination die einschränkenden Bedingungen erfüllt;
e) Ausführung der obigen Schritte a) bis d) für alle ersten Datenelemente;
f) Wahl (35) einer Kombination aus zweiten Datenelementen und dem ersten Datenelement mit der kleinsten Anzahl zuweisbarer zweiter Datenelemente aus den Kombinationen aus ersten und zweiten Datenelementen, die unter Schritt d) abgespeichert wurden; und
g) Zuweisung (37, 39, 41) eines der zweiten in Schritt f) gewählten Datenelemente.

10. Verfahren gemäß Anspruch 9, dadurch gekennzeichnet, daß die Schritte f) und g) folgende Schritte umfassen:
h) Auslesen von Informationen bezüglich der zweiten in Schritt d) abgespeicherten Datenelemente aus der zweiten Datenelementgruppe;
j) Prüfung (37) der dynamischen Bedingungen der Informationen bezüglich der ersten und zweiten in den Schritten h) und i) ausgelesenen Datenelementen;
k) Speichern (39) der zweiten Datenelemente, die als Ergebnis der Kontrolle in Schritt j) als die dynamischen Bedingungen erfüllend ermittelt werden, als zweite Datenelementanwärter für die Zuweisungsbestimmung;
l) Wiederholte Durchführung der Schritte j) und k) hinsichtlich aller in Schritt d) abgespeicherten zweiten Datenelemente; und
m) Auswahl eines der in Schritt k) abgespeicherten zweiten Datenelementanwärter für die Zuweisungsbestimmung als das dem ersten Datenelement zuzuweisendes zweites Datenelement.

11. Verfahren gemäß Anspruch 10, dadurch gekennzeichnet, daß das erste Datenelement ein Betriebsmittel und das zweite Datenelement einen Auftrag repräsentiert.

12. Verfahren gemäß Anspruch 10, dadurch gekennzeichnet, daß das erste Datenelement einen Auftrag und das zweite Datenelement ein Betriebsmittel repräsentiert.

13. Verfahren gemäß einem der Ansprüche 10, 11 oder 12, dadurch gekennzeichnet, daß dann, wenn eine Vielzahl dem ersten Datenelement zuweisbarer zweiter Datenelemente bei der Auswahl des zweiten Datenelements in Schrit g) vorhanden ist, das zweite Datenelement mit den strengsten einschränkenden Bedingungen ausgewählt wird.

## Revendications

1. Un système d'assitance pour la détermination d'affectations, prévu pour déterminer une affectation entre des ressources et des travaux conformément à des exigences de restriction d'affectation, dans lequel un premier élément de données représente une ressource et un second élément de données représente un travail, ou bien le premier élément de données représente un travail et le second élément de données représente une ressource, caractérisé par :
une première base de données (23) destinée à enregistrer le premier groupe d'éléments de données;
des premiers moyens de lecture (21, 33) destinés à lire les premiers éléments de données dans la première base de données;
une seconde base de données (27) destinée à enregistrer le second groupe d'éléments de données;
des seconds moyens de lecture (25, 35) destinés à lire les seconds éléments dans la seconde base de données;
des moyens de contrôle d'exigences de restriction (29) pour contrôler si une affectation entre chaque premier élément de données qui est lu dans la première base de données par les premiers moyens de lecture, et chaque second élément qui est lu dans la seconde base de données par les second moyens de lecture peut être faite en conformité avec des exigences de restriction prédéterminées qui régissent des combinaisons des premier et second éléments de données;
des moyens d'enregistrement d'éléments pouvant être affectés (31) qui sont destinés à enregistrer une combinaison des premiers et seconds éléments de données, qui est déterminée par les moyens de contrôle d'exigences de restriction, comme une combinaison satisfaisant les exigences de restriction; et
des moyens de détermination d'affectation (35, 39, 41) qui sont destinés à se référer aux moyens d'enregistrement d'éléments de données pouvant être affectés, et à déterminer une affectation d'un second élément de données aux premiers éléments, pour chacun des premiers éléments de données pris séquentiellement dans l'ordre de leur possibilité d'affectation croissante, compte tenu des exigences de restriction.

2. Un système selon la revendication 1, caractérisé en ce que les seconds moyens de lecture lisent un ensemble de seconds éléments de données chaque fois qu'un premier élément de données est lu.

3. Un système selon la revendication 1, caractérisé en ce que les moyens de détermination d'affectation comprennent :
des moyens de lecture de premiers éléments pour la détermination d'affectation (33), destinés à lire dans la première base de données une information concernant les premiers éléments de données qui sont enregistrés dans les moyens d'enregistrement d'éléments pouvant être affectés;
des moyens de lecture de seconds éléments pour la détermination d'affectation (35), destinés à lire dans la seconde base de données une information concernant les seconds éléments de données qui sont enregistrés dans les moyens d'enregistrement d'éléments pouvant être affectés;
une section de contrôle d'exigences dynamiques (37), destinée à contrôler des exigences dynamiques entre les premiers et seconds éléments de données qui sont lus respectivement par les moyens de lecture de premiers éléments de données pour la détermination d'affectation, et les moyens de lecture de seconds éléments de données pour la détermination d'affectation;
une section d'enregistrement de seconds éléments de données candidats pour la détermination d'affectation (39) qui est destinée à enregistrer chaque second élément de données qui est déterminé par la section de contrôle d'exigences dynamiques (37) comme un élément qui satisfait les exigences dynamiques, ce second élément de données étant enregistré sous la forme d'un second élément de données candidat pour la détermination d'affectation;
des moyens d'exécution destinés à exécuter de façon répétée une opération de contrôle qui est accomplie par la section de contrôle d'exigences dynamiques, et une opération d'enregistrement de la section d'enregistrement de seconds éléments candidats pour la détermination d'affectation, en relation avec tous les seconds éléments de données qui sont enregistrés dans la section d'enregistrement de seconds éléments de données pouvant être affectés; et
des moyens de détermination d'affectation (41) destinés à sélectionner l'un des seconds éléments de données qui sont enregistrés dans la section d'enregistrement de seconds éléments de données candidat pour la détermination d'affectation, et à affecter au premier élément de données le second élément de données sélectionné.

4. Un système selon l'une quelconque des revendications précédentes, caractérisé en ce que chaque premier élément de données représente une ressource, et chaque second élément de données représente un travail.

5. Un système selon l'une quelconque des revendications précédentes, caractérisé en ce que chaque premier élément de données représente un travail, et chaque second élément de données représente une ressource.

6. Un système selon la revendication 3, caractérisé en ce que les moyens de lecture de premiers éléments de données pour la détermination d'affectation se réfèrent aux moyens d'enregistrement de seconds éléments de données pouvant être affectés, pour lire séquentiellement les premiers éléments de données, dans l'ordre de possibilité d'affectation, à partir de celui ayant le plus petit nombre de seconds éléments de données pouvant être affectés, et ils se réfèrent à la première base de données pour lire une information concernant le premier élément qui a été lu.

7. Un système selon la revendication 3, caractérisé en ce que les moyens de détermination d'affectation se réfèrent à la section d'enregistrement de seconds éléments de données candidats pour la détermination d'affectation, ils sélectionnent le second élément de données ayant les exigences de restriction les plus sévères lorsqu'un ensemble de seconds éléments de données pouvant être affectés au premier élément de données sont présents, et ils affectent le premier élément de données au second élément de données sélectionné.

8. Un système selon la revendication 3, 6 ou 7, caractérisé en ce que les moyens de détermination d'affectation se réfèrent à la section d'enregistrement de seconds éléments de données candidats pour la détermination d'affectation, et ils effectuent un traitement exceptionnel lorsque aucun second élément de données candidat n'est présent.

9. Un procédé de détermination d'affectation, destiné à déterminer une affectation entre des ressources et des travaux conformément à des exigences de restriction d'affectation, dans lequel un premier élément de données représente une ressource et un second élément de données représente un travail, ou bien le premier élément de données représente un travail et le second élément de données représente une ressource, caractérisé par les étapes suivantes :
a) on lit un premier élément de données déterminé dans un groupe des premiers éléments de données;
b) on lit un ensemble des seconds éléments de données, pour le premier élément de données qui a été lu;
c) on contrôle (29) si une combinaison des premiers éléments de données et de chacun des seconds éléments de données satisfait les exigences de restriction;
d) on enregistre (31) la combinaison du premier élément de données et de chacun des seconds éléments de données pour laquelle le résultat du contrôle indique que la combinaison satisfait les exigences de restriction;
e) on effectue les étapes a) à d) ci-dessus pour tous les premiers éléments de données;
f) on sélectionne (35) une combinaison de seconds éléments de données et du premier élément de données ayant le plus petit nombre de seconds éléments de données pouvant être affectés, à partir des combinaisons de premiers éléments de données et de seconds éléments de données qui ont été enregistrées à l'étape d); et
g) on affecte (37, 39, 41) l'un des seconds éléments de données qui ont été sélectionnés à l'étape f).

10. Un procédé selon la revendication 9, caractérisé en ce que les étapes f) et g) comprennent les étapes suivantes :
h) on lit dans le premier groupe d'éléments de données une information concernant le premier élément de données qui a été enregistré à l'étape d);
i) on lit dans le second groupe d'éléments de données une information concernant les seconds éléments de données qui ont été enregistrés à l'étape d);
j) on contrôle (37) des exigences dynamiques de l'information concernant les premiers et seconds éléments de données qui ont été lus aux étapes h) et i);
k) on enregistre (39) à titre de seconds éléments de données candidats pour la détermination d'affectation, les seconds éléments de données pour lesquels on détermine que les exigences dynamiques sont satisfaites, d'après le résultat du contrôle effectué à l'étape j);
l) on accomplit de façon répétée les étapes j) et k) pour tous les seconds éléments de données qui sont enregistrés à l'étape d); et
m) on sélectionne l'un des seconds éléments de données candidats pour la détermination d'affectation qui ont été enregistrés à l'étape k), et on détermine que le second élément de données sélectionné est un second élément de données à affecter au premier élément de données.

11. Un procédé selon la revendication 10, caractérisé en ce que le premier élément de données représente une ressource, et le second élément de données représente un travail.

12. Un procédé selon la revendication 10, caractérisé en ce que le premier élément de données représente un travail, et le second élément de données représente une ressource.

13. Un procédé selon la revendication 10, 11 ou 12, caractérisé en ce que, lorsqu'un ensemble de seconds éléments de données, pouvant être affectés au premier élément de données, sont présents au moment de la sélection du second élément de données à l'étape g), on sélectionne le second élément de données ayant les exigences de restriction les plus sévères.
